# EUROPEAN PATENT APPLICATION

(11) **EP 4 759 524 A1**
(43) Date of publication of application: **17.06.2026**
(21) Application number: 25221816.9
(22) Date of filing: 09.12.2025
(51) Int. Cl.: B29C 70/20, B64C 3/14, B64C 3/26, B29C 70/22, B29C 70/54, B29D 99/00

(54) **COMPOSITE PART**

(30) Priority: 11.12.2024 GB 202418180
(71) Applicant: Airbus Operations Limited, Bristol BS34 7PA (GB)
(72) Inventor: BRYANT, Stuart, Bristol, BS34 7PA (GB); BARNETT, Thomas, Bristol, BS34 7PA (GB)
(74) Representative: Worthington, Richard Easton

(57) **Abstract**

A composite part for a vehicle is provided. The composite part has a first surface (22a) and an opposing second surface (22b), wherein at least part of the first surface forms an outer aerodynamic surface of a vehicle. A region of the part has a curvature in two orthogonal directions. The part has an undulation (40) defining a channel (60) in one of the first surface or the second surface, and a corresponding ridge (50) in the other of the first surface and the second surface.

## Description

### FIELD OF THE INVENTION

The present invention relates to a composite part for a vehicle and a method of making the composite part.

### BACKGROUND OF THE INVENTION

Modem vehicles, especially in aerospace and automotive industries, are constructed with composite components that have smooth, aerodynamic profiles. The aerodynamic profiles significantly improve the performance by reducing the weight and drag of the vehicle, thereby leading to better fuel efficiency and performance.

The aerodynamic profiles often feature complex curved geometry. It is difficult to manufacture composite parts with this geometry without forming "wrinkles" in the part. Wrinkles occur when the composite layers are forced to contract and expand (for example, to form the complex curved geometry), but the composite layers are formed of a material that has minimal ability to contract. This leads to bending or kinks in the fibres in the composite layers, which leads to wrinkling of the part.

Wrinkling affects the aerodynamic profile and structural integrity of the part. A composite part having a wrinkle in its layers may, therefore, perform less well than the intended component without a wrinkle.

The occurrence of wrinkling can be minimised by forming a thick laminate in several stages of thinner layers. The thinner composite layers can be easily manipulated to form the complex curved geometry better while minimising the occurrence of bends or kinks of the fibres in the composite layers. However, using thinner composite layers increases the manufacturing time of the composite parts, as multiple smaller composite layers must be carefully laid together to form the composite part.

There is therefore a need for a more efficient and reliable method of manufacturing composite parts that have curved aerodynamic profiles.

### SUMMARY OF THE INVENTION

A first aspect of the invention provides a composite part for a vehicle, having: a first surface and an opposing second surface, wherein at least part of the first surface forms an outer aerodynamic surface of a vehicle; wherein a region of the part has a curvature in two orthogonal directions; and wherein the part has an undulation defining a channel in one of the first surface or the second surface, and a corresponding ridge in the other of the first surface and the second surface.

Optionally, the ridge has a longitudinal direction and a run-out region that terminates at an end of the ridge, wherein the ridge has a changing cross section transverse to the longitudinal direction that reduces in height towards the end of the ridge forming a ramp, and the channel has a longitudinal direction wherein the channel has a changing cross section transverse to the longitudinal direction that reduces in depth towards the end of the channel.

Optionally, the channel terminates at a channel opening rim at one end of the undulation.

Optionally, the channel opening rim is formed at an edge of the composite part.

Optionally, the region of the part with curvature in two orthogonal directions has no more than one change of direction of curvature in any one of the orthogonal directions.

Optionally, the ridge and channel both have at least two changes of direction of curvature.

Optionally, the two orthogonal directions are transverse to a thickness direction of the part.

Optionally, the second surface is not exposed to airflow over the wing.

Optionally, the ridge and channel are formed in a different region of the part to the region that has a curvature in two orthogonal directions.

Optionally, the part of the first surface that forms the outer aerodynamic surface of the vehicle extends beyond the region with curvature in two orthogonal directions.

Optionally, the ridge has a crown extending between two adjacent foot portions.

Optionally, the ridge has an omega cross-sectional shape.

Optionally, the composite part is formed of a plurality of ply layers, each ply layer having a width of at least 600mm.

Optionally, the composite part is formed of a plurality of blankets of ply layers stitched together.

Optionally, plurality of blankets comprises a first layer having a +45 degree fibre orientation, and a second layer having a -45 degree fibre orientation.

Optionally, the composite part comprises carbon fibre material.

Optionally, the vehicle is an aircraft.

Optionally, the first surface forms part of an upper or lower cover of an aircraft wing.

Optionally, the region of the part with curvature in two orthogonal directions is in an inboard region of the wing.

A further aspect of the invention provides a method of manufacturing a composite part with an edge, the method comprising:
providing a mould tool with a mould surface, wherein a region of the mould surface has a curvature in two orthogonal directions; and another region of the mould surface region has a ridge or channel, arranging a lay-up of composite layers on the mould surface; consolidating the lay-up on the mould surface to form an uncured part, and curing the stack to form a composite part, wherein the layup is arranged and/or consolidated on the mould surface without cutting or darting the composite layers within a boundary edge of the part.

A further aspect of the invention provides an aircraft wing comprising a composite part, the composite part having a first surface and an opposing second surface, wherein at least part of the first surface forms an outer aerodynamic surface of the aircraft wing; wherein a region of the part has a curvature in two orthogonal directions; and wherein the part has an undulation defining a channel in one of the first surface or the second surface, and a corresponding ridge in the other of the first surface and the second surface.

A further aspect of the invention provides a vehicle comprising a composite part, the composite part having: a first surface and an opposing second surface, wherein at least part of the first surface forms an outer aerodynamic surface of the vehicle; wherein a region of the part has a curvature in two orthogonal directions; and wherein the part has an undulation defining a channel in one of the first surface or the second surface, and a corresponding ridge in the other of the first surface and the second surface.

Optionally, the vehicle is an aircraft.

### BRIEF DESCRIPTION OF THE DRAWINGS

Embodiments of the invention will now be described with reference to the accompanying drawings, in which:
Figure 1 show an aircraft;
Figure 2 shows a cross-sectional view of a wing box;
Figure 3 shows a front view of an aircraft wing;
Figure 4 shows a cross-sectional view of a wing;
Figure 5 shows a portion of the wing cover;
Figure 6 shows a portion of the wing cover with an undulation;
Figure 7 shows a side view of the undulation;
Figures 8A and 8B show cross-sectional views of the undulation;
Figures 9A and 9B show a tool with a layup for manufacturing the undulation;
Figure 10 shows an exploded view of a blanket;
Figure 11 shows a top down view of a layup on a tool;
Figure 12 shows a top down view of a consolidated layup with an undulation on the tool.

### DETAILED DESCRIPTION OF EMBODIMENT(S)

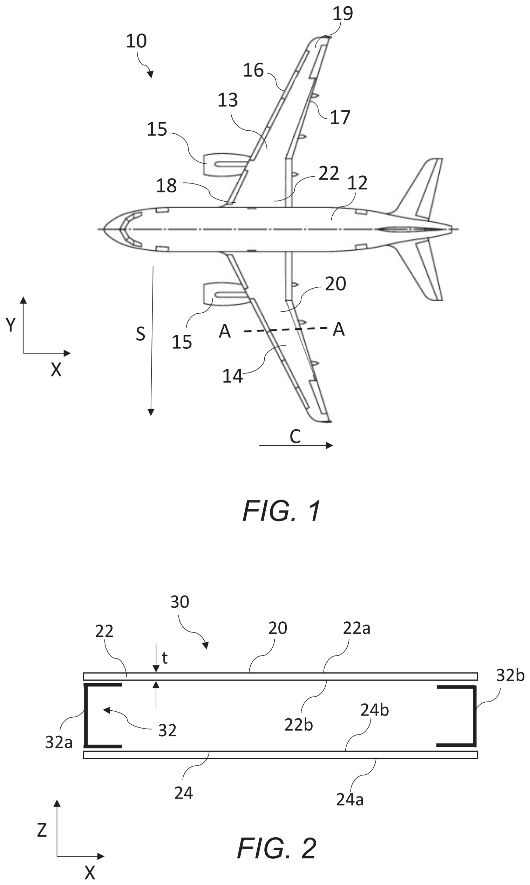

Figure 1 shows an exemplary vehicle 10. In this example, the vehicle 10 is an aircraft with a fuselage 12, and starboard and port fixed wings 13, 14. An engine 15 is mounted to each wing 13, 14. The aircraft 10 is a typical jet passenger transport aircraft but the invention is applicable to a wide variety of vehicles, such as automobiles, trucks or boats. The invention is also applicable to other fixed wing aircraft types, including commercial, military, passenger, cargo, jet, propeller, general aviation, etc. with any number of engines attached to the wings or fuselage. The aircraft is a fixed wing aircraft with cantilever wings.

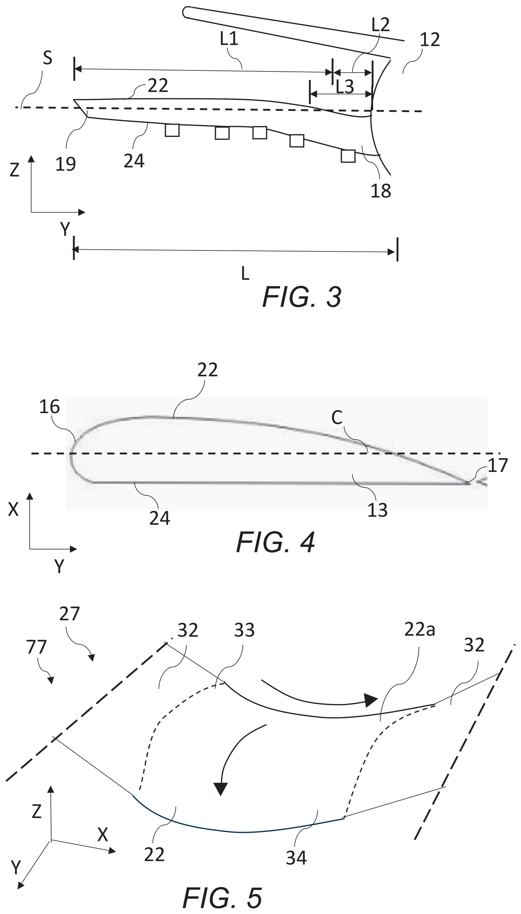

The axes shown in Figures 1 and 3 represent the usual reference orthogonal axes of the aircraft 10. The X-axis defines the longitudinal fore-aft direction of the aircraft; the Y-axis defines the spanwise direction and the Z-axis defines the vertical up-down direction of the aircraft.

The wings 13, 14 are similar in construction and so only the starboard wing 13 will be described in detail. The wing 13 has a cantilevered wing structure with a length extending in a spanwise direction along the spanwise axis S from a root 18 to a tip 19, with the root 18 being joined to the aircraft fuselage 12.

The wing 13 has a leading edge 16 and a trailing edge 17. The leading edge 16 is at the forward end of the wing and the trailing edge 17 is at the rearward end of the wing. The wing 13 also has a width that extends in a chordwise direction along a chordwise axis C from the leading edge 16 to the trailing edge 17 of the wing. The wing 13 is tapered from the inboard root end 18 to the outboard tip end 19, such that the chord length of the wing 13 decreases from the inboard end to the outboard end.

The wing 13 has an upper wing cover 22, a lower wing cover 24 and leading and trailing edge cover panels. These covers may be collectively referred to as the wing cover 20. The wing cover 20 has an outer aerodynamic surface 25 which forms an aerofoil profile of the wing 13 for generating lift. It will be appreciated that, although shown as a single body, the wing cover 20 may be formed of multiple wing covers assembled together. The cover 20 has a thickness in a direction perpendicular to the chordwise and spanwise directions. The wing cover 20 has a thickness t that varies in a chordwise and spanwise direction of the wing aerofoil profile to optimise the weight of the wing cover 20.

Figure 2 shows a schematic cross-sectional view of a wing box 30 inside the wing 13. The wing box 30 is arranged to support the majority of the loads applied to the wing 13. The wing box 30 comprises the upper cover 22 and lower cover 24. The wing box 30 further comprises a wing structure 32 for supporting the wing covers 22, 24, which includes a front spar 32a and a rear spar 32b. The upper cover 22 and lower cover 24 may be connected to a front spar 32a and a rear spar 32b using any suitable method, such as for example by fasteners and/or by bonding. The wing 13 has a thickness direction perpendicular to the chordwise and spanwise directions. and the thickness of the wing 13 decreases from the inboard end to the outboard end. Correspondingly, the wing box 30 is also tapered in both these directions.

The upper cover 22 and lower cover 24 are shown schematically in Figure 2 and are non-planar along the length (along the spanwise axis S) and the width (along the chordwise axis C) of the wing 13. As set out above, the upper cover 22 and lower cover 24 have a thickness t. The upper cover 22 and lower cover 24 extend across the wing 13. The upper cover 22 and lower cover 24 may be at partially covered by a fairing at the root end 18 of the wing 13 (shown schematically as "L2" in Figure 3). The upper cover 22 and lower cover 24 therefore have regions that are exposed to the airflow over the wing 13 and regions that are not exposed to the airflow.

The upper cover 22 and lower cover 24 have respective outer surfaces 22a, 24a and opposing inner surfaces 22b, 24b. At least part of the outer surface 22a, 24a of the upper cover 22 and the lower cover 24 forms the aerodynamic surface 25 between the leading and trailing edges 16, 17 of the wing. The parts of the covers 22, 24 that forms the aerodynamic surface 25 are exposed to the airflow over the wing 13 and extends along length L1 of the wing 13.

Similarly, the part of the outer surface 22a, 24a of the upper cover 22 and the lower cover 24 that extend along length L2 of the wing 13 are contained under the fairing at the root end 18 do not form part of the aerodynamic surface 25 of the wing 13. The part of the outer surface 22a, 24a are therefore not in the airflow over the wing 13. While L2 is shown in this example to be formed under a fairing at the root end 18 of the wing 13, it will be understood that a length L2 of the wing 13 may be not in the airflow over the wing 13 by any other suitable means or arrangements.

The inner surfaces 22b, 24b of the upper cover 22 and the lower cover 24 do not form part of the aerodynamic surface 25 of the wing 13 because they are not exposed to airflow over the wing 13. This is because the inner surfaces 22b, 24b are contained within the wing box 30 and do not come into contact with any airflow over the wing 13.

Figure 3 shows a schematic front view of the wing 13. As shown, the wing 13 extends from the wing tip 19, towards an inboard wing root 18. The wing 13 and wing tip 19 is shown schematically in this figure, with several structures (such as the engine 15) omitted for clarity. The wing 13 has a length L that includes a first length L1 that is exposed to airflow over the wing 13, a second length L2 that schematically represents a length of the wing 13 that is not exposed to the airflow over the wing 13, and a transition region L3 (described in further detail below).

The wing 13 has a curvature along the length L of the wing 13 with respect to the spanwise axis S. The curvature along the length L of the wing 13 may be altered depending on the general construction of the aircraft 10 and the performance requirements of the wing 13. In this example, the wing 13 curves upwardly with respect to the Z-axis along the length L of the wing 13. The wing 13 curves upwardly with respect to the Z-axis from the wing root 18 to the wing tip 19 (i.e. along length L) to impact the aerodynamic performance of the wing 13. Altering the curvature of the wing 13 along the length L improves the aerodynamic performance of the wing 13 by providing a more efficient lift distribution along the span of the wing 13.

The wing 13 also curves upwardly along a transition region L3 of the wing 13. In this example, the transition region L3 includes part of the wing 13 that is not exposed to airflow (i.e. length L2) and part of the wing 13 that is exposed to airflow over the wing (i.e. Length L1). The transition region L3 covers part of the wing 13 near the root 18 of the wing 13.

The upper cover 22 and lower cover 24 of the wing 13 are shaped conform to the curvature of the wing 13. It will be appreciated that the curvature of the remaining length of the wing 13 (i.e. from the transition region L3 to the wing tip 19) is also curved as the upper cover 22 and lower cover 24 are not planar. However, in this example, the wing 13 has the largest change in curvature in the transition region L3.

In this example, the outer surface 22a of the upper cover 20 is concavely shaped in the inboard region of the wing 13, i.e. from the wing root 18 and transitions into a convex shape through the transition region L3. Similarly, the outer surface 24a of the lower cover 24 mirrors this structure, so that the lower cover 24 is convex inboard of the wing 13 and transitions to a concave shape through the transition region L3. It will be understood that this curvature is merely exemplary in Figure 3, and that the curvature of the upper and lower covers 22, 24 may change in the spanwise axis S depending on the overall architecture of the wing 13.

Figure 4 shows a cross-sectional view of the wing 13 along line A-A (shown in Figure 1). The wing 13 also has a curvature along the chord axis C of the wing, known as the "camber" of the wing 13. The upper cover 22 and lower cover 24 of the wing are therefore also curved in the chordwise direction of the wing. Typically, the upper cover 22 has a higher curvature than the lower cover 24 to form an asymmetrical aerodynamic profile 15 known as a "positive camber". The positive camber of the wing 13 helps to increase the lift coefficient of the wing 13 so the wing 13 can produce more lift at a given angle of attack compared to wings with symmetrical cross-sections.

The upper cover 22 and the lower cover 24 therefore have parts of the respective outer surfaces 22a, 24a and inner surface 22b, 24b with substantial curvature in both orthogonal directions, i.e. the Y-axis (spanwise axis) and the X-axis (chordwise axis). The upper and lower covers 22, 24 have a thickness direction t perpendicular to the chordwise and spanwise direction.

Figure 5 shows an exemplary section 27 of the upper cover 22 with a double curvature region 34. The section 27 of the upper cover 22 is formed in two standard regions 32 and a doubly curved region 34. The double curvature region 34 has curvature in two orthogonal directions i.e. the Y-axis (spanwise axis) and the X-axis (chordwise axis). In this example, the double curvature region 32 is adjacent two standard regions 32 of the upper cover 22. As shown, the region with curvature 34 in two orthogonal directions has no more than one change of direction of curvature in any one of the orthogonal directions, X and Y. The transition region L3 of the wing 13 therefore also does not have more than one change of curvature in any one of the orthogonal directions X,Y. However, the transition region L3 may change depending on the architecture of the wing 13. As the upper cover 22 is not planform, the standard regions 32 will also exhibit some curvature in the spanwise and chordwise direction, but the curvature is not as prevalent or extreme as the curvature in the doubly curved region 34.

The standard regions 32 connect to the doubly curved region 34 along a transition region 33, which ensures a smooth blending of the surface between the less curved standard region 32 and the doubly curved region 34. This ensures that the aerodynamic surface 25 of the cover 20 is smooth across the transition region L3 of the wing 13. While the upper cover 22 is shown in Figure 5, it will be understood that the lower cover 24 may similarly have region of double curvature 34 and regions of standard curvature 32 to correspond to the upper cover 22 and depending on the overall structure of the wing 13.

In this example, the curvature of the doubly curved region 34 is concave in the X-direction and concave in the Y-direction. However, the curvature of the doubly curved region 34 may take any suitable form depending on the overall structure of the wing 13 and the cover 20. Preferably, the doubly curved region 34 extends across the entire chord of the wing 13 (from the leading edge 16 to the trailing edge 17). In other examples, only portions of the wing 13 may doubly curved, or the doubly curved region 34 may only extend along a portion of the chord C. Preferably, the doubly curved surface 34 is formed in an inboard region of the wing 13, i.e. nearer the root 18 of the wing 13.

Only one section 27 is shown in Figure 5, but several sections may be joined together to form the upper cover 22 of the wing 13. In this example, the double curvature region 34 of the upper cover 22 may be out of the airflow (e.g. along length L2 of the wing 13). Therefore, portions of the upper cover section 27 may form part of the aerodynamic surface of the wing 13 (i.e. exposed to the airflow over the wing 13) while others are not within the airflow over the wing 13. For example, a standard region 32 may form part of the outer aerodynamic surface 25 of the wing 13, while the doubly curved region 34 and the other standard region 32 may be contained beneath a fairing at the root end 18 of the wing 13, or otherwise shielded from the airflow over the wing 13. In other examples, all three regions 32, 34 of the section 27 may form part of the outer aerodynamic surface 25 of the wing, or one of the sections 27 may form part of the outer aerodynamic surface 25. In further examples still, the part of the upper cover 22 that forms the outer aerodynamic surface 25 of the aircraft 10 may not cover all of the region with the doubly curved region 34.

The section 27 of the upper cover 22 is preferably manufactured as a continuous part, i.e. a cured layup is used to form the section 27 of the cover 22. However, forming the section 27 a continuous layup with the doubly curved region 34 is challenging because of the length and width of composite layers that are required to form the layup.

More specifically, forming the section 27 of the upper cover 22 is formed by laying several composite layers together and curing to form a composite part, i.e. the section 27 of the upper cover 22 (discussed in more detail below). The composite layers are typically mounted onto a mould tool, conformed to the shape of the mould tool and cured to form the section 27. The doubly curved region 34 may be manufactured by forming the thickness in stages rather than in a single laminate stack. This may be done by using smaller (e.g. narrower) composite layers that are adhered together. While this can be used to form an accurately shaped doubly curved region 34, it is time consuming to manufacture and difficult to layup with other parts of the upper cover 22, such as the standard regions 32.

Alternatively, the doubly curved region 34 may be formed by darting (i.e. cutting) to form the regions of complex curvature. While this does helps the layup to conform to the desired shape and curvature of the doubly curved region 34 better, manufacturing the cover 22 in this manner is time consuming as each layer must be darted and accurately positioned on the tool before curing. Furthermore, darting the composite layers 70 also affects the structural performance and integrity of the part, which is undesirable.

While it is preferable to form the section 27 using continuous composite layers, this can be difficult because the path length of the composite fibres (in the composite layers) changes along the length of the section 27. For example, the path length of the fibres along the doubly curved region 34 increases because of the curvature in the X and Y direction. The composite layers are therefore generally wider and longer than the regions used to form the standard regions 32 because the composite layers need to be conformed around the mould tool to form the doubly curved region 34.

However, as the curvature of the standard regions 32 is less pronounced, when using a continuous composite layer to form the section 27 leads to an excess of material around the standard regions 32. The excess material may be cut or removed from the layup but affects the continuity of the fibres in the section 27 and can affect the structural integrity and mechanical performance of the upper cover 22.

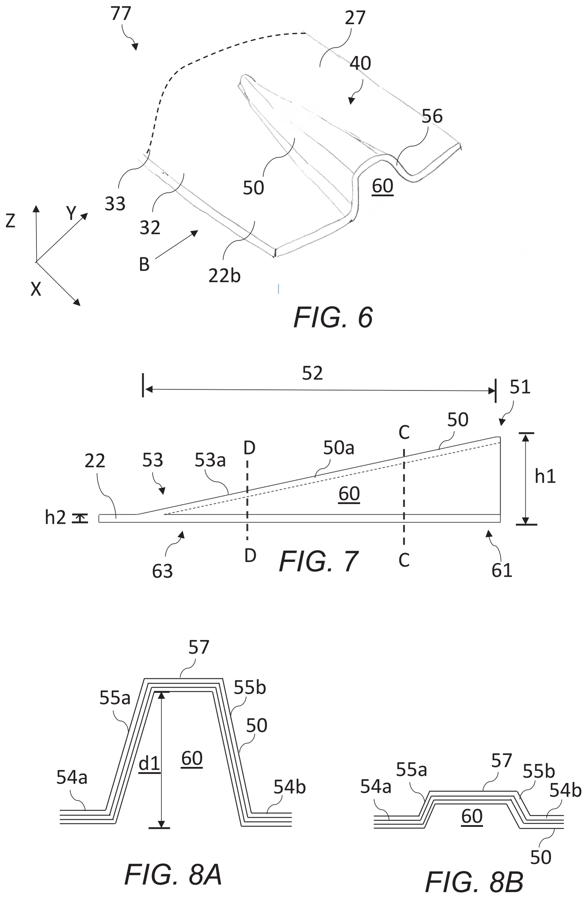

To utilise this "excess" of material, the upper cover 22 includes an undulation 40 formed on the inner surface 22b of the upper cover, as shown in Figure 6. In this example, the undulation 40 is formed on the standard region 32 of the section 27. The undulation 40 (i.e. the ridge 50 and the undulation 60) is formed in a different region of the cover 22 to the doubly curved region 34.

A side view of the undulation 40 (from direction B in Figure 6) is shown in Figure 7. The undulation 40 defines a channel 60 in the outer surface 22a of the upper cover 22, and a corresponding ridge 50 formed on the inner surface 22b of the cover 22. As shown, the ridge 50 is a protrusion that extends in the Z-axis (i.e. the up-down direction) with respect to the outer surface 22a. The ridge 50 has a longitudinal length 52 that extends in a longitudinal direction that, in this example, is generally aligned with the chordwise direction C (X-axis) of the wing 13.

However, the ridge 50 may be aligned with the spanwise direction (Y-axis) of the wing 13. In other examples, the ridge 50 may be aligned at an angle relative to either the spanwise axis or the chordwise axis (e.g. 30 degree relative to the chordwise axis). The orientation of the undulation 40 is dependent on the tooling used to manufacture the cover 22 (discussed in more detail below) and can be altered depending on the overall architecture of the wing 13.

Typically, the inner surface 22b of the upper cover 22 is attached to a plurality of other structures in the wing box 30 in addition to the spars 32a, 32b shown in Figure 2. The upper cover 22 is typically attached to stringers (not shown) that extend spanwise along the wing 13, as well as ribs (not shown) that extend chordwise along the wing. The lower cover 24 is also attached to these relevant structures on the underside of the wing 13. The undulation 40 may therefore be manufactured so as to not obstruct the additional structures in the wing box 30, or may be manufactured to complement the stringers, ribs or other components in the wing box 30.

The undulation 40 shown in Figure 6 is formed on a standard section 32 of the section 27 of the upper wing cover 22. This standard section 32 may be at any position along the transition region L3. The undulation 40 (i.e. channel 60) may therefore be on a part of the upper surface 22a that is exposed to the airflow over the wing 13. To avoid the channel 60 from impacting the aerodynamic performance and surface 25 of the wing 13, the upper cover 22 may further comprise a fairing (not shown) that is positioned over the undulation 40 to maintain the aerodynamic surface 25 of the wing.

In other examples, the undulation 40 is formed on the non-aerodynamic portion of the upper cover 20, i.e. the length L2 of the wing 13 that is shielded from the airflow over the wing 13. The channel 60 therefore does not have any fairing as the channel 60 is not exposed to airflow over the wing 13. It will be understood that where the undulation 40 is formed on a non-aerodynamic portion of the upper cover 20, the undulation 40 may be reversed so the ridge 50 is formed on the upper surface 22a and the channel 60 is formed in the inner surface 22b.

Returning to Figure 6, as shown, the ridge 50 is integrally formed with the upper cover 22, i.e. the ridge 50 and upper cover 22 are monolithically formed as a unitary construction. The thickness of the ridge 50 is therefore defined by the thickness of the lay-up of the cover 22. The ridge 50 acts as a further stiffener within the wing 13, but by being integrally formed with the cover 22, reduces the overall part count of the wing 13 and thereby makes the wing 13 easier to manufacture. Furthermore, by integrally forming the ridge 50 with the cover 22, the edges of the ridge 50 (discussed further detail below) are less sensitive to impact damage as the ridge 50 cannot be dislodged from the cover.

In this example, the ridge 50 has an "Omega" cross-sectional shape, but the cross-sectional shape of the ridge 50 may be any suitable continuous shape, such as circular, bulbous or blade shaped.

The ridge 50 has a first height h1 at a first end 51 of the ridge 50. The height of the ridge decreases along the length 52 of the ridge to a second height h2 at the second end 53. The ridge 50 has a run-out region 53a that terminates at the second end 53a of the ridge 50. The run-out region 53a is tapered so that it becomes flush with the surface of the upper cover 22. The tapering ensures a smooth transition from the ridge 50 to the cover 22, thereby minimising any abrupt changes in height of the ridge 50. In this example, the height of the ridge 50 decreases linearly (i.e. the height decreases at a constant rate) to form a ramp 50a. However, in other examples, the height of the ridge 50 may decrease non-linearly, so the shape of the ridge 50 is curved.

The first end 51 defines a channel rim (or opening) 56. The channel 60 terminates at the channel opening rim 56. The channel rim 56 is formed at a first end 51 of the undulation 40. The channel rim 56 is away from the second end 53 of the ridge 50. In this example, the channel rim 56 is formed at an edge of the section 27 of the cover 22.

Figures 8A and 8B show cross-sectional views of the ridge 50 along lines C-C (closer to the first end 51 of the ridge 50) and D-D (closer to the second end 53 of the ridge) in Figure 7. The ridge 50 has a crown 57 between adjacent foot portions 54a, 54b. The crown is joined to the foot portions 54a, 54b by respective webs 55a, 55b. The webs 55a, 55b are generally upstanding, angled relative to the plane, x-y, of the cover 22. The ridge 50 therefore has at least two changes of direction in curvature. More specifically, the foot portion 55a joins the web portion 55a with a concave curvature, and then forms the crown 57 with a convex curvature, and then joins the opposing web 55b with a concave curvature, and finally joins the foot 54b with a convex curvature. As shown, the height of the crown 57 above the foot portions 54a, 54b decreases substantially linearly from the first end 51 of the ridge 50 to the second end 53.

The ridge 50 defines a channel 60. The channel 60 is the hollow inside part of the ridge 50 and is defined by the space enclosed by the ridge 50, i.e. the webs 55a, 55b and the crown 57. In the example shown in Figures 7, 8A and 8B, the channel is generally cuboidal shaped to correspond to the "Omega" shape of the ridge 50. In other examples, the channel 60 may be U-shaped, cylindrical shaped, or any suitable shape to correspond to the profile of the ridge 50. As the shape of the channel 60 corresponds to the shape of the ridge 50, the channel 60 also has at least two changes of direction of curvature.

The channel 60 also extends in the longitudinal direction 52 of the ridge 50 from a first end 61 of the channel to a second end 63, where the channel 60 terminates. The channel 60 has a depth d1 at the first end 61 that decreases along the length of the channel 60 to zero at the second 63. The cross-section of the channel 60 transverse to the longitudinal direction 52 so that the channel 60 reduces in depth towards the second end 63 of the channel 60. The volume of the channel 60 therefore decreases towards the second end 63.

While the undulation 40 is described in relation to the upper cover 22, it will be understood that the undulation 40 (and section 27 with the doubly curved region 34) may be formed on the lower cover 24. Further, the lower cover 24 may have a corresponding arrangement of undulation(s) 40 to match the arrangement of the upper cover 22 or may have an alternative arrangement.

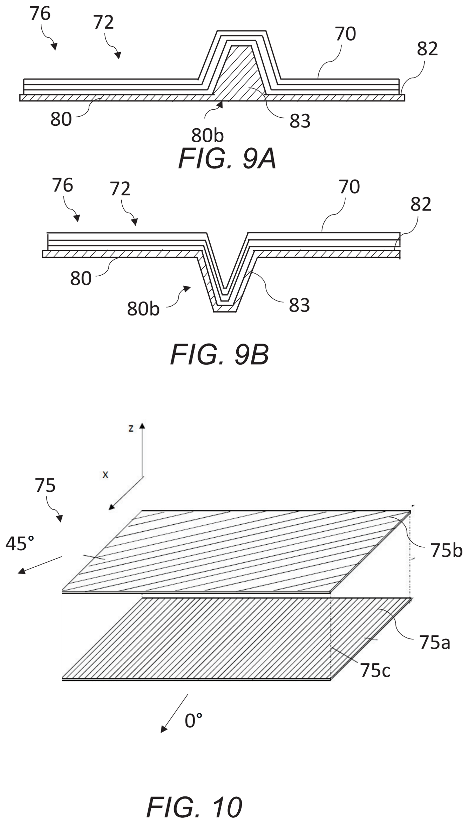

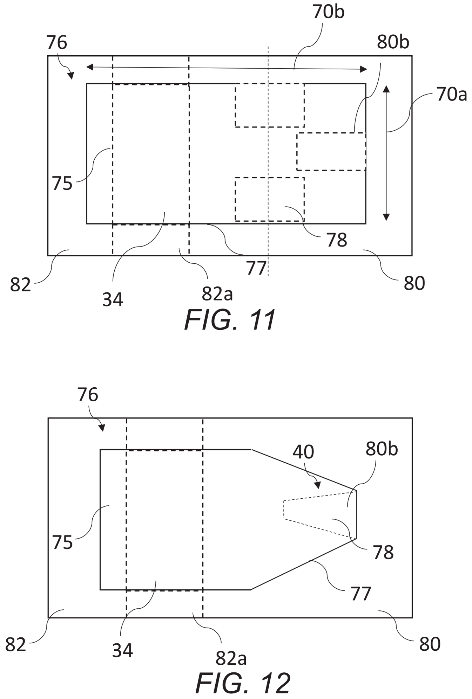

Figures 9A to 12 show a manufacturing process of making the cover 22. A tool 80 is provided with a tool surface 82. As shown in Figure 11, the tool surface 82 has a region 82a that has curvature in two orthogonal directions (i.e. X and Y directions) to form the doubly curved region 34. The mould tool surface 82 also includes a region 82b with, in this example, a channel. As shown, the region 82a and region 82b are not on the same part of the mould tool surface 82. The region 82a with the curvature in two orthogonal directions provides an increased path length for the composite layers 70.

Several composite layers 70 are draped over the tool surface 82 so as to conform to the shape of the tool surface 82. The composite layers 70, otherwise known as ply layers 70, are either single composite layers or pre-preg layers that are infused with resin. Preferably, the composite layers 70 comprise unidirectional fibres. The composite layers 70 also comprise carbon fibre material. Once the lay-up 72 is formed on the tool surface 82, the lay-up is cured to form the cover 22.

In some arrangements, the composite layers 70 are stitched together to form blankets 75. Figure 10 shows an exploded view of an exemplary blanket 75 which 75a having a 0° fibre orientation, and a second layer 75b having a 45° fibre orientation. The first and second layers 75a, 75b are joined together, e.g. by stitching, as generally indicated by the broken lines 75c. In this example, the 0° fibre orientation is aligned with the longitudinal axis of the ridge 40.

The plurality of blankets 75 may be arranged in a stack to achieve a generally balanced layup. To that end, some of the blankets 75 may comprise biaxial composite layers having 0/45 fibre orientations, and others of the blankets 75 of composite layers may have 0/135 fibre orientations. In other examples, the blankets 75 may comprise biaxial composite layers having 0/90 fibre orientations. These composite layers are stitched together to form a plurality of blankets, ensuring uniformity and strength. The blankets comprise a first layer with a +45 degree fibre orientation and a second layer with a -45 degree fibre orientation, providing balanced mechanical properties.

The lay-up 75 is consolidated on the mould surface 82 to form an uncured part 76. The uncured part 76 (and subsequently cured part) has an edge 77 extending around the part. By forming the layup on the mould tool surface 82 in this manner, the layup 75 can be arranged and/or consolidated onto the mould tool surface 82 without darting or cutting the composite layers 70 within a boundary edge of the part. Therefore, the composite layers 70 may be cut to the correct size to be laid on the tool surface 82, but the part of the composite layers 70 that are arranged on the regions 82a, 82b are not cut or darted. By not cutting or darting the composite layers 70, the lay-up 75 prevents wrinkles from occurring.

In the exemplary tool 80 shown in Figure 9A, this shows the region 80b in more detail with a ridge 50 or channel 60. The region 80b includes a feature 83 in the form of a protrusion so that the composite layers 70 can be draped over the protrusion 83 to form the ridge 50. The tool 80 also includes a region 82a that is curved to form the doubly curved surface 34 of the cover 22 (shown in Figures 11 and 12). Figure 9B shows an alternative tool 80 arrangement, where the feature 83 is in the form of a channel so that the composite layers 70 can be laid to form the channel 60. Similarly, the tool 80 in Figure 9B includes a region 80a to form the doubly curved surface 34.

Figures 11 and 12 show a top-down view of the tool 80 and the tool surface 82 with the layup 75 of composite layers 70. In Figure 11, the layup has been placed on top of the tool surface 82 before consolidating the layup 75 on the mould 80 to form the undulation 40. As shown, the doubly curved region 34 is formed at one end of the layup 75 at a region 80a. The "excess material" 78 of the layup 75 is shown schematically.

In Figure 12, the layup is consolidated with the surface 82 of the tool 80. As shown, the undulation 40 is formed using the "excess material" 78 (i.e. the additional length and width of the composite layers 70) of the layup 75. By forming the section 27 of the cover 22 in this manner, the occurrence of wrinkling is minimised in the layup 75.

Additionally, by manufacturing the section 27 of the cover 22 in this manner, the width 70a and length 70b of the composite layers 70 can be maximised. For example, each composite layer 70 may have a width of at least 600mm. This helps minimise the manufacturing time of the cover 22 as fewer composite layers 70 can be used to form larger sections 27 of the cover 22. This is advantageous, as the complex curvature of the doubly curved region 34 can be manufactured accurately, with fewer wrinkles and more quickly than conventional methods of manufacture.

The consolidated layup 75 in Figure 12 is then cured in the conventional manner to form a composite part 77 (part of which are shown in Figures 5 and 6). The composite part 77 is then demoulded and removed from the tool 80.

Although the above undulation 40, ridge 50 and channel 60 has been described above in relation to the upper cover 22 of the wing 13, it will be understood that this may be utilised on other parts of the aircraft 10, such as the lower cover 24, the horizontal tail plane, engine cowling or a sharklet on the wing. Furthermore, the undulation 40, ridge 50 and channel 60 may also be formed on components found on other vehicles, such as automobile vehicles or boats.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A composite part for a vehicle, having:
a first surface and an opposing second surface, wherein at least part of the first surface forms an outer aerodynamic surface of a vehicle;
wherein a region of the part has a curvature in two orthogonal directions; and
wherein the part has an undulation defining a channel in one of the first surface or the second surface, and a corresponding ridge in the other of the first surface and the second surface.

2. A composite part according to any preceding claim, wherein the ridge has a longitudinal direction and a run-out region that terminates at an end of the ridge, wherein the ridge has a changing cross section transverse to the longitudinal direction that reduces in height towards the end of the ridge forming a ramp, and the channel has a longitudinal direction wherein the channel has a changing cross section transverse to the longitudinal direction that reduces in depth towards the end of the channel.

3. A composite part according to claim 2, wherein the channel terminates at a channel opening rim at one end of the undulation, preferably
wherein the channel opening rim is formed at an edge of the composite part.

4. A composite part according to any preceding claim, wherein the region of the part with curvature in two orthogonal directions has no more than one change of direction of curvature in any one of the orthogonal directions.

5. A composite part according to any preceding claim, wherein the ridge and channel both have at least two changes of direction of curvature, and/or
wherein the two orthogonal directions are transverse to a thickness direction of the part.

6. A composite part according to any preceding claim, wherein the second surface is not exposed to airflow over the vehicle.

7. A composite part according to any preceding claim, wherein the ridge and channel are formed in a different region of the part to the region that has a curvature in two orthogonal directions.

8. A composite part according to any preceding claim, wherein the part of the first surface that forms the outer aerodynamic surface of the vehicle extends beyond the region with curvature in two orthogonal directions.

9. A composite part according to any preceding claim, wherein the ridge has a crown extending between two adjacent foot portions and/or wherein the ridge has an omega cross-sectional shape.

10. A composite part according to any preceding claim, wherein the composite part is formed of a plurality of composite layers, each composite layer having a width of at least 600mm.

11. A composite part according to any preceding claim, wherein the composite part is formed of a plurality of blankets of composite layers stitched together, preferably
wherein the plurality of blankets comprises a first layer having a +45 degree fibre orientation, and a second layer having a -45 degree fibre orientation.

12. A composite part according to any preceding claim, wherein the composite part comprises carbon fibre material.

13. A composite part according to any preceding claim, wherein the vehicle is an aircraft, preferably
wherein the first surface forms part of an upper or lower cover of an aircraft wing, preferably
wherein the region of the part with curvature in two orthogonal directions is in an inboard region of the wing.

14. A method of manufacturing a composite part with an edge, the method comprising:
providing a mould tool with a mould surface, wherein a region of the mould surface has a curvature in two orthogonal directions; and
another region of the mould surface region has a ridge or channel,
arranging a lay-up of composite layers on the mould surface;
consolidating the lay-up on the mould surface to form an uncured part, and
curing the stack to form a composite part,
wherein the layup is arranged and/or consolidated on the mould surface without cutting or darting the composite layers within a boundary edge of the part.

15. A vehicle comprising a composite part, the composite part having:
a first surface and an opposing second surface, wherein at least part of the first surface forms an outer aerodynamic surface of the vehicle;
wherein a region of the part has a curvature in two orthogonal directions; and
wherein the part has an undulation defining a channel in one of the first surface or the second surface, and a corresponding ridge in the other of the first surface and the second surface, preferably
wherein the vehicle is an aircraft , preferably wherein the aerodynamic surface is of an aircraft wing.
